# EUROPEAN PATENT APPLICATION

(11) **EP 4 365 687 A1**
(43) Date of publication of application: **08.05.2024**
(21) Application number: 23740925.5
(22) Date of filing: 21.03.2023
(51) Int. Cl.: G05B 17/02, G06F 9/455

(54) **METHOD AND APPARATUS FOR MODIFYING PARAMETERS OF KINEMATIC PAIR, AND STORAGE MEDIUM**

(30) Priority: 22.09.2022 CN 202211158463
(71) Applicant: Contemporary Amperex Technology Co., Limited, Ningde, Fujian 352100 (CN)
(72) Inventor: SHI, Deqiang, Fujian 352100 (CN); WU, Runqi, Fujian 352100 (CN); WANG, Xuming, Fujian 352100 (CN)
(74) Representative: Gong, Jinping
(86) International application number: PCT/CN2023/082922
(87) International publication number: WO 2024/060553

(57) **Abstract**

Embodiments of the present application provide a method and an apparatus for modifying a parameter of a kinematic pair, and a storage medium. The kinematic pair is included in a first device, and the first device is configured with control software. The method includes: obtaining a target value of a first parameter, where the first parameter is a motion state parameter of a kinematic pair; obtaining N first kinematic pairs, where the N first kinematic pairs have same values of the first parameter, and N is an integer greater than or equal to 1; setting modeling states of the N first kinematic pairs in the control software to an editable state; and calling the control software to modify the values of the first parameter of the N first kinematic pairs to the target value. According to the method provided in the embodiments of the present application, the working efficiency of modifying parameters of kinematic pairs during virtual debugging can be effectively improved. Compared with the prior art, this method greatly reduces process steps to be performed by an engineer, and can also significantly reduce an error rate and manpower costs during manual operation.

## Description

The present application claims priority to Chinese Patent Application No. 202211158463.1, filed with the China National Intellectual Property Administration on September 22, 2022 and entitled "METHOD AND APPARATUS FOR MODIFYING PARAMETER OF KINEMATIC PAIR, AND STORAGE MEDIUM", which is incorporated herein by reference in its entirety.

### Technical Field

The present application relates to the technical field of virtual simulation, and more specifically, to a method and an apparatus for modifying a parameter of a kinematic pair, and a storage medium.

### Background Art

Virtual simulation technology is to establish a digital model by using simulation software, and then simulate and debug a production procedure, a robot program, a programmable logic controller (PLC) program, etc. in an actual workshop based on the digital model.

In a debugging process for virtual simulation, an engineer usually needs to spend a lot of time in customizing and modifying parameters of kinematic pairs of a device. Currently, when modifying a plurality of kinematic pairs having same parameters, an engineer needs to modify the parameters of the kinematic pairs one by one, and also needs to frequently and extensively modify model states of the kinematic pairs. Consequently, a process of a debugging stage is complex and tedious, making the debugging process inefficient. In addition, due to a tedious and complex process of debugging operations, misoperation or omission of operations occurs during manual adjustment of parameters.

### Summary of the Invention

The present application provides a method and an apparatus for modifying a parameter of a kinematic pair, and a storage medium, which can improve the efficiency of modifying a parameter of a kinematic pair during virtual simulation and debugging.

In a first aspect, a method for modifying a parameter of a kinematic pair is provided, where the kinematic pair is included in a first device, and the first device is configured with a control software. The method includes: obtaining a target value of a first parameter, where the first parameter is a motion state parameter of a kinematic pair; obtaining N first kinematic pairs, where the N first kinematic pairs have same values of the first parameter, and N is an integer greater than or equal to 1; setting modeling states of the N first kinematic pairs in the control software to an editable state; and calling the control software to modify the values of the first parameter of the N first kinematic pairs to the target value.

In the technical solution of the present application, the N first kinematic pairs having the same values of the first parameter are obtained, the modeling states of the N first kinematic pairs in the control software are set to the editable state, and the control software is further called to modify the values of the first parameter of the N first kinematic pairs to the obtained target value of the first parameter. In this way, modeling states and parameter values of a group of kinematic pairs having same values of the first parameter can be modified in batch, thereby improving the working efficiency during virtual simulation and debugging.

In some possible implementations, the first parameter includes at least one of the following: an upper limit of motion, a lower limit of motion, a maximum acceleration, and a maximum speed.

In some possible implementations, the method further includes: if the N first kinematic pairs are not obtained, or if the obtained N first kinematic pairs do not have same values of the first parameter, calling the control software to output first information, where the first information is used to indicate the re-obtaining of the N first kinematic pairs.

In the foregoing implementation, when parameters of a group of kinematic pairs having same values of the first parameter are modified in batch, if the N first kinematic pairs are not obtained, or if the obtained N first kinematic pairs do not have same values of the first parameter, a control program is called to output the first information, where the first information is used to indicate the re-obtaining of the N first kinematic pairs. In this way, the accuracy of obtaining a group of kinematic pairs having same parameter values during virtual simulation and debugging can be effectively improved, thereby improving the working efficiency of modifying parameters of kinematic pairs during virtual simulation and debugging.

In some possible implementations, the method further includes: if an upper limit of motion is less than a lower limit of motion in a modified first parameter, or if a type of a value of the modified first parameter is not a numeric type, calling the control software to output second information, where the second information is used to indicate the re-obtaining of a target value of the first parameter.

In the foregoing implementation, when parameters of a group of kinematic pairs having same values of the first parameter are modified in batch, if the upper limit of motion is less than the lower limit of motion in the modified first parameter, or if the type of the value of the modified first parameter is not a numeric type, a control program is called to output the second information, where the second information is used to indicate the re-obtaining of a target value of the first parameter. This facilitates ensuring the accuracy of the obtained target value of the first parameter, thereby improving the working efficiency of modifying parameters of kinematic pairs during virtual simulation and debugging.

In some possible implementations, the method further includes: setting modeling states of the N first kinematic pairs in the control software to a non-editable state.

In the foregoing implementation, after parameters of a group of kinematic pairs having same values of the first parameter are modified in batch, modeling states of the group of kinematic pairs may be modified to a non-editable state, which effectively prevents false modification of values of parameters of the kinematic pairs due to misoperation during virtual simulation and debugging.

In some possible implementations, the obtaining N first kinematic pairs includes: after project data is accessed in the control software, obtaining the N first kinematic pairs from a project list of the project data, or obtaining the N first kinematic pairs from the project list in the control software based on a preset identifier.

In the foregoing implementation, before parameters of a group of kinematic pairs having same values of the first parameter are modified in batch, during selection of the group of kinematic pairs, the kinematic pairs may be selected from a project list of project data in the control software, or the kinematic pairs may be obtained in batch from the project list in the control software based on a preset identifier. In this way, the efficiency of obtaining kinematic pairs is effectively improved, thereby improving the working efficiency of modifying parameters of kinematic pairs during virtual simulation and debugging.

In some possible implementations, the first kinematic pair includes a cylinder shaft or a servo shaft.

In some possible implementations, the method further includes: calling the control software to generate log information, where the log information includes input information and output information, and the output information includes the first information and the second information.

In the foregoing implementation, after parameters of a group of kinematic pairs having same values of the first parameter are modified in batch, the control software may be called to generate log information, where the log information may be used to record input information and output information during modification of the parameters of the kinematic pairs. When an error occurs during virtual debugging, troubleshooting may be performed based on the log information, which improves the accuracy of modifying parameters of kinematic pairs during virtual simulation.

In a second aspect, an apparatus for modifying a parameter of a kinematic pair is provided, where the kinematic pair is included in a first device, and the first device is configured with control software. The apparatus includes:
an obtaining module configured to obtain a target value of a first parameter, where the first parameter is associated with a motion state of the kinematic pair,
the obtaining module being further configured to obtain N first kinematic pairs, where the N first kinematic pairs have same values of the first parameter, and N is an integer greater than or equal to 1; and
a processing module configured to set modeling states of the N first kinematic pairs in the control software to an editable state,
the processing module being further configured to call the control software to modify the values of the first parameter of the N first kinematic pairs to the target value.

In the technical solution of the present application, the N first kinematic pairs having the same values of the first parameter are obtained, the modeling states of the N first kinematic pairs in the control software are set to the editable state, and the control software is further called to modify the values of the first parameter of the N first kinematic pairs to the obtained target value of the first parameter. In this way, modeling states and parameter values of a group of kinematic pairs having same values of the first parameter can be modified in batch, thereby improving the working efficiency during virtual simulation and debugging.

In some possible implementations, the first parameter includes at least one of the following: an upper limit of motion, a lower limit of motion, a maximum acceleration, and a maximum speed.

In some possible implementations, if the obtaining module does not obtain the N first kinematic pairs, or if the N first kinematic pairs obtained by the obtaining module do not have same values of the first parameter, the processing module is further configured to call the control software to output first information, where the first information is used to indicate the re-obtaining of the N first kinematic pairs.

In the foregoing implementation, when parameters of a group of kinematic pairs having same values of the first parameter are modified in batch, if the N first kinematic pairs are not obtained, or if the obtained N first kinematic pairs do not have same values of the first parameter, a control program is called to output the first information, where the first information is used to indicate the re-obtaining of the N first kinematic pairs. In this way, the accuracy of obtaining a group of kinematic pairs having same parameter values during virtual simulation and debugging can be effectively improved, thereby improving the working efficiency of modifying parameters of kinematic pairs during virtual simulation and debugging.

In some possible implementations, if an upper limit of motion is less than a lower limit of motion in a first parameter modified by the processing module by calling the control software, or if a type of a value of the first parameter modified by the processing module by calling the control software is not a numeric type, the processing module is further configured to call the control software to output second information, where the second information is used to indicate the re-obtaining of a target value of the first parameter.

In the foregoing implementation, when parameters of a group of kinematic pairs having same values of the first parameter are modified in batch, if the upper limit of motion is less than the lower limit of motion in the modified first parameter, or if the type of the value of the modified first parameter is not a numeric type, a control program is called to output the second information, where the second information is used to indicate the re-obtaining of a target value of the first parameter. This facilitates ensuring the accuracy of the obtained target value of the first parameter, thereby improving the working efficiency of modifying parameters of kinematic pairs during virtual simulation and debugging.

In some possible implementations, the processing module is further configured to set modeling states of the N first kinematic pairs in the control software to a non-editable state.

In the foregoing implementation, after parameters of a group of kinematic pairs having same values of the first parameter are modified in batch, modeling states of the group of kinematic pairs may be modified to a non-editable state, which effectively prevents false modification of values of parameters of the kinematic pairs due to misoperation during virtual simulation and debugging.

In some possible implementations, the obtaining module is specifically configured to: after project data is accessed in the control software, obtain the N first kinematic pairs from a project list of the project data, or obtain the N first kinematic pairs from the project list in the control software based on a preset identifier.

In the foregoing implementation, before parameters of a group of kinematic pairs having same values of the first parameter are modified in batch, during selection of the group of kinematic pairs, the kinematic pairs may be selected from a project list of project data in the control software, or the kinematic pairs may be obtained in batch from the project list in the control software based on a preset identifier. In this way, the efficiency of obtaining kinematic pairs is effectively improved, thereby improving the working efficiency of modifying parameters of kinematic pairs during virtual simulation and debugging.

In some possible implementations, the first kinematic pair includes a cylinder shaft or a servo shaft.

In some possible implementations, the processing module is further configured to call the control software to generate log information, where the log information includes input information and output information, and the output information includes the first information and the second information.

In the foregoing implementation, after parameters of a group of kinematic pairs having same values of the first parameter are modified in batch, the control software may be called to generate log information, where the log information may record input and output information during modification of the parameters of the kinematic pairs. When an error occurs during virtual debugging, troubleshooting may be performed based on the log information, which improves the accuracy of modifying parameters of kinematic pairs during virtual simulation.

In a third aspect, an apparatus for modifying a parameter of a kinematic pair is provided, including a processor and a memory, where the memory is configured to store a program, and the processor is configured to call and run the program from the memory to perform the method for modifying a parameter of a kinematic pair in the first aspect or in any possible implementation of the first aspect.

In a fourth aspect, a computer-readable storage medium is provided, including a computer program that, when run on a computer, causes the computer to perform the method for modifying a parameter of a kinematic pair in the first aspect or in any possible implementation of the first aspect.

In a fifth aspect, there is provided a computer program product including instructions that, when executed by a computer, cause the computer to perform the method for modifying a parameter of a kinematic pair in the first aspect or in any possible implementation of the first aspect.

### Brief Description of the Drawings

In order to illustrate the technical solutions of the embodiments of the present application more clearly, the accompanying drawings required in the description of the embodiments of the present application will be described briefly below. Obviously, the accompanying drawings described below are merely some embodiments of the present application, and for those of ordinary skill in the art, other accompanying drawings can also be obtained from these accompanying drawings without any creative efforts.
FIG. 1 is a schematic diagram of a structure of a virtual simulation apparatus to which an embodiment of the present application is applicable;
FIG. 2 is a schematic flowchart of a method for modifying a parameter of a kinematic pair according to an embodiment of the present application;
FIG. 3 is a schematic flow block diagram of another method for modifying a parameter of a kinematic pair according to an embodiment of the present application;
FIG. 4 is a schematic diagram of a user interface of software for modifying a parameter of a kinematic pair according to an embodiment of the present application;
FIG. 5 is a schematic block diagram of a structure of an apparatus for modifying a parameter of a kinematic pair according to an embodiment of the present application; and
FIG. 6 is a schematic diagram of a hardware structure of an apparatus for modifying a parameter of a kinematic pair according to an embodiment of the present application.

In the accompanying drawings, the figures are not drawn to scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example but should not be used to limit the scope of the present application. That is, the present application is not limited to the described embodiments.

In the description of the present application, it should be noted that all technological and scientific terms used herein have the same meanings as those commonly understood by those skilled in the art to which the present application belongs. The terms used are merely for the purpose of describing specific embodiments, and are not intended to limit the present application. The terms "comprising" and "having" and any variations thereof in the specification and the claims of the present application and in the foregoing brief description of the drawings are intended to cover non-exclusive inclusions. The term "a plurality of" means two or more. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and should not be construed as indicating or implying the relative importance. The term "perpendicular" does not mean being perpendicular in the strict sense, but within an allowable range of errors. The term "parallel" does not mean being parallel in the strict sense, but within an allowable range of errors.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application may be combined with another embodiment.

The orientation terms in the following description all indicate directions shown in the drawings, but do not limit the specific structure in the present application. In the description of the present application, it should also be noted that the terms "disposing", "connecting", and "connection" should be interpreted in the broad sense unless explicitly defined and limited otherwise. For example, the terms may mean a fixed connection, a detachable connection, or an integral connection, or may be a direct connection, an indirect connection by means of an intermediate medium, or internal communication between two elements. For those of ordinary skills in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. Additionally, the character "/" in the present application generally indicates that the associated objects before and after the character are in a relationship of "or".

Currently, in existing operation techniques, a conventional operation process of customizing and modifying a parameter of a kinematic pair of a device in a debugging process for virtual simulation is specifically as follows: selecting a kinematic pair to be modified in virtual simulation software (for example, Tecnomatix software); enabling a modification state, and setting a model state of the kinematic pair to be modified to an editable state (for example, "Set Modeling"), that is, enabling a model modification permission, where in this state, a parameter of the kinematic pair can be modified; starting a kinematics editor corresponding to the kinematic pair; selecting the kinematic pair to be modified in the kinematics editor; entering and confirming values of an upper limit of motion, lower limit of motion, maximum acceleration, and maximum speed, which are to be modified and correspond to the kinematic pair; disabling the modification state, and setting the model state of the kinematic pair to be modified to a non-editable state (for example, "End Modeling"), that is, disabling the model modification permission, where in this state, the parameter of the kinematic pair cannot be modified; and selecting a next kinematic pair to be modified, and repeating the foregoing steps to complete the modification of parameters of subsequent kinematic pairs.

In a possible implementation, when parameters of a plurality of kinematic pairs having same parameter values in a single device are modified by using the foregoing method, a parameter of each kinematic pair still needs to be modified one by one, and model states of the kinematic pairs also need to be frequently and extensively modified. Consequently, a process of a debugging stage is complex and tedious, making the debugging process inefficient. In addition, due to a tedious and complex process of debugging operations, mistakes, such as omission or redundant filling of data, are inevitable during manual adjustment of parameters, which lead to an increase in time and manpower costs for rework.

In view of this, the present application provides a method and an apparatus for modifying a parameter of a kinematic pair, and a storage medium. N first kinematic pairs having same values of a first parameter are obtained, modeling states of the N first kinematic pairs in control software are set to an editable state, and the control software is further called to modify the values of the first parameter of the N first kinematic pairs to an obtained target value of the first parameter. In this way, parameters of a plurality of kinematic pairs having same parameter values and model states of the kinematic pairs can be modified in batch, which significantly improves the working efficiency during virtual simulation and debugging, and reduces an error rate, manpower costs, and time costs during manual operation.

The method for modifying a parameter of a kinematic pair provided in the present application may be applied to a terminal device, or to a server, or to software running on the terminal device or the server, for example, software from Tecnomatix, such as Process Simulate, Process Design, or Teamcenter.

A method for quickly modifying a parameter according to an embodiment of the present application will be described below in detail in conjunction with specific embodiments.

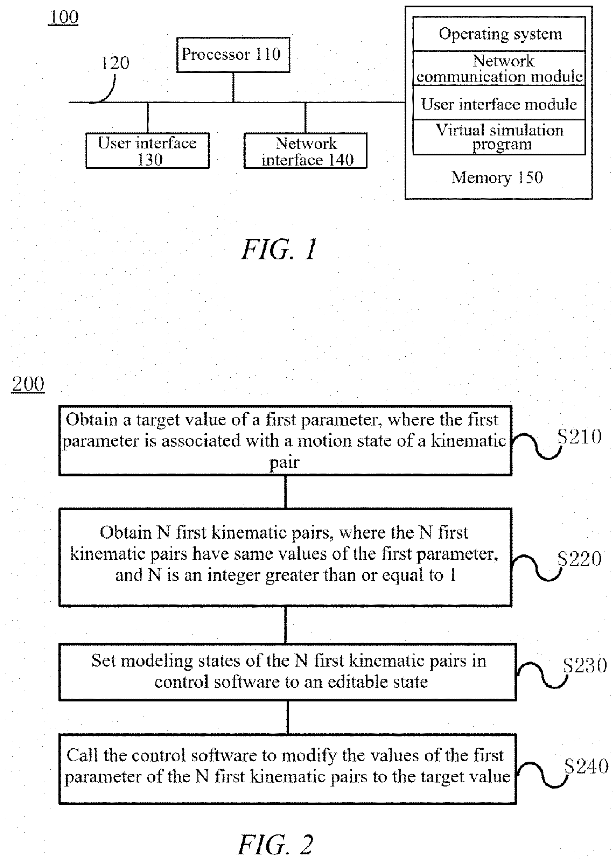

FIG. 1 is a schematic diagram of a structure of a virtual simulation apparatus 100 to which an embodiment of the present application is applicable.

As shown in FIG. 1, the virtual simulation apparatus 100 may include: a processor 110 (for example, a central processing unit (CPU), a communication bus 120, a user interface 130, a network interface 140, and a memory 150.

The communication bus 120 is used for implementing communication between the components. The user interface 130 may be used for connecting a display, an input unit (for example, a keyboard), etc. The user interface 130 may include a standard wired or wireless interface. The memory 150 may be a high-speed random access memory (RAM), or may be a stable non-volatile memory (NVM), for example, a magnetic disk memory. Optionally, the memory 150 may alternatively be a storage apparatus independent of the processor 110.

It should be understood that the structure shown in FIG. 1 is only an example, and does not constitute a limitation on a virtual simulation device involved in the embodiments of the present application.

Specifically, the memory 150, as a storage medium, may include an operating system, a network communication module, a user interface module, and a virtual simulation program. Optionally, the user interface module in the memory 150 may be used for entering modeling data and modeling a virtual simulation scene. The modeling data may be obtained from a tooling library, a human posture library, a process instruction library, a product model library, etc. in the virtual simulation program.

In the virtual simulation device involved in the embodiments of the present application, the network interface 140 is used for data communication with a network server. The user interface 130 is used for data exchange with a user. The processor 110 and the memory 150 may be provided in the virtual simulation device. The virtual simulation device calls, through the processor 110, the virtual simulation program stored in the memory 150 to perform various virtual simulation operations.

It should be understood that the virtual simulation device may also be referred to as a first device in the embodiments of the present application, which is an example and will not be limited in the embodiments of the present application.

For example, the virtual simulation program involved in the embodiments of the present application may be Process Simulate software from Tecnomatix. Tecnomatix, as a working environment for setting up virtual simulation, is a comprehensive set of digital manufacturing solutions, which can enable digital transformation on manufacturing and a process of turning innovative ideas and raw materials into actual products. The virtual simulation program is simulation software capable of running on an industrial personal computer, corresponds to a virtual device of a field device, includes a motion mechanism and a logic block, and can perform a related action for a control signal of a PLC and feed an execution result back to the PLC. The main function of Process Simulate is to implement off-line programming and simulation verification of a digital model.

FIG. 2 is a schematic flow block diagram of a method 100 for modifying a parameter of a kinematic pair according to an embodiment of the present application. As shown in FIG. 2, the method includes steps S210 to S240.

In this embodiment of the present application, a kinematic pair is a mobile connection between two members that are in direct contact with each other and that can produce relative motion between them. Elements, such as points, lines, and surfaces, on the two members that are involved in the contact to constitute the kinematic pair are referred to as kinematic pair elements.

In a possible implementation, the kinematic pairs may be classified into a lower pair and a higher pair based on nature of contact between two members. A kinematic pair formed by two members in surface contact is referred to as the lower pair. The lower pair may be further classified into a sliding pair and a revolute pair based on a form of relative motion between two members. Specifically, a kinematic pair in which relative motion between two members is linear motion is referred to as a sliding pair; and a kinematic pair in which relative motion between two members is rotation is referred to as a hinged pair. A kinematic pair formed by two members in point contact or surface contact is referred to as a higher pair, for example, rotation between a wheel and a rail, a cam and a follower, a gear, etc.

In a possible implementation, the kinematic pairs may be classified based on forms of relative motion. If relative motion between two members forming a kinematic pair is planar motion, the kinematic pair is referred to as a planar kinematic pair, and if the relative motion therebetween is spatial motion, the kinematic pair is referred to as a spatial kinematic pair. A kinematic pair in which two members perform only relative rotation is referred to as a revolute pair, and a kinematic pair in which two members perform only relative movement is referred to as a sliding pair.

It should be understood that in a possible implementation, the method 200 for modifying a parameter of a kinematic pair according to an embodiment of the present application may be performed by a plug-in (for example, the Joint Editor plug-in) obtained after secondary development of Process Simulate from Tecnomatix by using C Sharp language in Visual Studio software, and the method 200 may alternatively be performed by other software or devices, which are examples and will not be limited in the embodiments of the present application.

In S210, a target value of a first parameter is obtained, where the first parameter is a motion state parameter of a kinematic pair.

Specifically, in this embodiment of the present application, the target value of the first parameter may be a preset value of a system, or may be a value manually set according to actual requirements, which are examples and will not be limited in the embodiments of the present application.

In S220, N first kinematic pairs are obtained, where the N first kinematic pairs have same values of the first parameter, and N is an integer greater than or equal to 1.

It should be understood that the N kinematic pairs obtained in this embodiment of the present application may be included in one device, or the N kinematic pairs may be included in a plurality of devices, which are examples and will not be limited in the embodiments of the present application.

In S230, modeling states of the N first kinematic pairs in control software are set to an editable state.

Specifically, in this embodiment of the present application, the modeling states of the selected N first kinematic pairs having the same values of the first parameter are set to the editable state. In the editable state, the values of the first parameter of the N first kinematic pairs can be modified. For example, in the Joint Editor plug-in or in the Process Simulate software from Tecnomatix, the modeling states of the selected N first kinematic pairs having the same values of the first parameter may be set to the editable state, that is, a "Set Modeling" option in virtual simulation software is clicked.

It should be understood that the control software in this embodiment of the present application may be referred to as virtual simulation software or virtual simulation and debugging software, which are examples and will not be limited in the embodiments of the present application.

In S240, the control software is called to modify the values of the first parameter of the N first kinematic pairs to the target value.

Specifically, in this embodiment of the present application, the values of the first parameter of the selected N first kinematic pairs may be modified in batch through the Joint Editor plug-in.

In the embodiments of the present application, compared with the technical solution in the prior art in which an engineer modifies modeling states of kinematic pairs and parameters of the kinematic pairs one by one, the technical solution provided in the embodiments of the present application makes it possible for a plug-in, which is obtained after secondary development of a control program in the virtual simulation software, to modify modeling states of a plurality of kinematic pairs having same parameter values and parameters of the plurality of kinematic pairs in batch, such that the working efficiency of modifying parameters of kinematic pairs in batch during virtual debugging can be effectively improved. Compared with the prior art, this technical solution greatly reduces process steps to be performed by an engineer, and can also significantly reduce an error rate and manpower costs during manual operation.

Optionally, in some embodiments, the first parameter involved in this embodiment of the present application may include at least one of the following: an upper limit of motion, a lower limit of motion, a maximum speed, and a maximum acceleration. For example, in a possible implementation, when the first parameter of the kinematic pair includes the upper limit of motion and the lower limit of motion, a value of the first parameter of the kinematic pair may be set such that the upper limit of motion is 50 mm, and the lower limit of motion is 0 mm. This specifically means that a maximum range of movement of the kinematic pair in the virtual simulation software is 0 mm to 50 mm.

Optionally, in some embodiments, after the target value of the first parameter is obtained in the method 200, determination further needs to be performed on the target value of the first parameter. For example, if the upper limit of motion is less than the lower limit of motion in the obtained first parameter, or if a type of the obtained target value of the first parameter is not a numeric type, first information is output, where the first information is used to indicate the re-obtaining of a target value of the first parameter. The first information may be log information output by the Joint Editor plug-in.

The determination of the obtained first target value facilitates ensuring the accuracy of the obtained target value of the first parameter, thereby improving the working efficiency of modifying parameters of kinematic pairs during virtual simulation and debugging.

For example, the target value of the first parameter cannot include invalid characters, such as: "@", "!", and "?". When there is an invalid character in the obtained target value of the first parameter, the control software outputs error indication information, where the error indication information indicates the re-obtaining of a target value of the first parameter.

Optionally, in some embodiments, after the N first kinematic pairs having the same values of the first parameter are obtained in the method 200, determination further needs to be performed on the obtained N first kinematic pairs. For example, if the N kinematic pairs are not obtained, or if the obtained N kinematic pairs do not have same values of the first parameter, second information is output, where the second information is used to indicate the re-obtaining of the N first kinematic pairs. The second information may be log information output by the Joint Editor plug-in.

Through determination of the obtained N first kinematic pairs, the accuracy of obtaining a group of kinematic pairs having same parameter values during virtual simulation and debugging can be effectively improved, thereby improving the working efficiency of modifying parameters of kinematic pairs during virtual simulation and debugging.

Optionally, in some embodiments, the N first kinematic pairs may be obtained in the method 200 in such a manner that the N first kinematic pairs may be directly selected on a display interface of the virtual simulation software as required. In other words, after project data is accessed in the virtual simulation software, the N first kinematic pairs may be selected from a project list of the project data, or a general level of kinematic pairs may be selected from the project list, and the N first kinematic pairs may then be selected under the general level.

Optionally, in some other embodiments, the N first kinematic pairs may be obtained from the project list based on a preset identifier. Specifically, during establishment of a digital model in virtual software, different kinematic pairs may be pre-named using identifiers based on a standard, and subsequently, kinematic pairs may be directly selected based on the identifiers. In this way, the efficiency of obtaining kinematic pairs is effectively improved, thereby improving the working efficiency of modifying parameters of kinematic pairs during virtual simulation and debugging.

For example, kinematic pairs having same values of the first parameter among a plurality of kinematic pairs may be named using preset identifiers. For example, a key character "-V1" is set in the name of the kinematic pairs, and when the key character is recognized by software, the corresponding kinematic pairs are selected.

Optionally, in some embodiments, the kinematic pair involved in this embodiment of the present application may be a cylinder shaft or a servo shaft.

Optionally, in some embodiments, after the values of the first parameter of the N first kinematic pairs are modified to the target value, the method 200 further includes: modifying modeling states of the N first kinematic pairs to a non-editable state, which effectively prevents false modification of values of parameters of the kinematic pairs due to misoperation during virtual simulation and debugging.

Specifically, in this embodiment of the present application, after the values of the first parameter of the N first kinematic pairs are modified to the target value, the modeling states of the N first kinematic pairs may be set to the non-editable state. In the non-editable state, values of the first parameter of the N first kinematic pairs cannot be modified. If the values of the first parameter of the N kinematic pairs need to be modified again, the modeling states of the N kinematic pairs need to be modified to an editable state first. For example, in the Joint Editor plug-in or in the Process Simulate software from Tecnomatix, the modeling states of the selected N first kinematic pairs having the same values of the first parameter may be set to the non-editable state, that is, an "End Modeling" option in the virtual simulation software is clicked.

Optionally, in some embodiments, in the method 200, after the control software is called to modify the values of the first parameter of the N first kinematic pairs to the target value, the control software may be further called to generate log information, where the log information is used to record input information and output information during virtual debugging. For example, the output information includes the first information and the second information.

In the foregoing implementation, after parameters of a group of kinematic pairs having same values of the first parameter are modified in batch, the control software may be called to generate log information, where the log information may be used to record input information and output information during modification of the parameters of the kinematic pairs. When an error occurs during virtual debugging, troubleshooting may be performed based on the log information, which improves the accuracy of modifying parameters of kinematic pairs during virtual simulation.

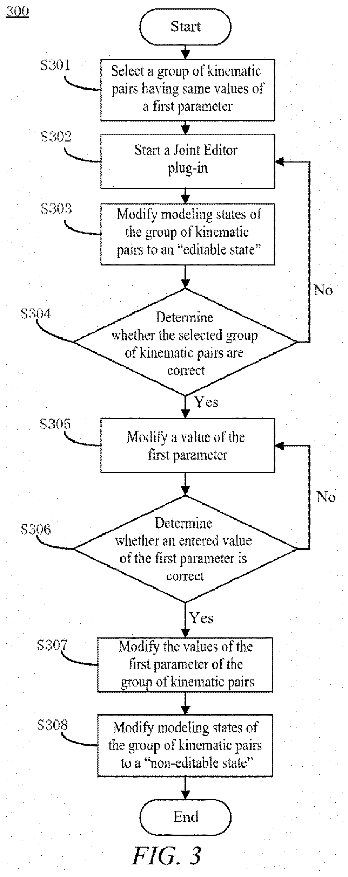

FIG. 3 is a schematic flow block diagram of a method 300 for modifying a parameter of a kinematic pair according to an embodiment of the present application.

As shown in FIG. 3, the method for modifying a parameter of a kinematic pair includes steps S301 to S308.

In S301, in Tecnomatix software, a group of kinematic pairs having same values of a first parameter are selected in batch, where the kinematic pair may be a cylinder shaft or a servo shaft.

It should be understood that in this embodiment of the present application, N first kinematic pairs may be selected on a display interface of virtual simulation software as required. In other words, after project data is accessed in the virtual simulation software, the N first kinematic pairs may be selected from a project list of the project data, or a general level of kinematic pairs may be selected from the project list, and the N first kinematic pairs may then be selected under the general level, or the N first kinematic pairs may be obtained from the project list based on a preset identifier. These are examples and will not be limited in the embodiments of the present application.

In S302, the Joint Editor plug-in in the Tecnomatix software is started, and a user interface is displayed.

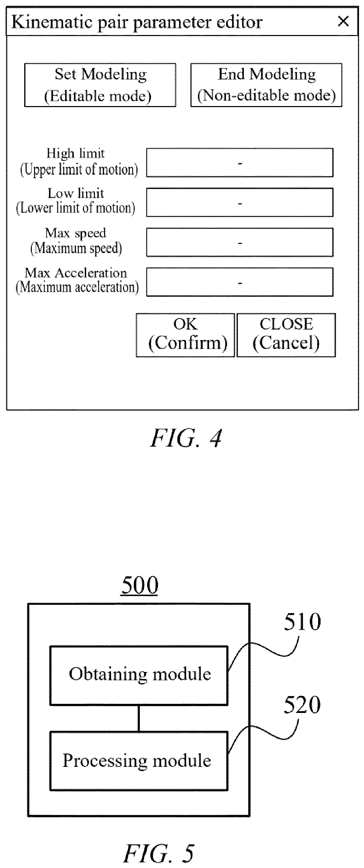

For example, in a possible implementation, a schematic diagram of a user interface for modifying a parameter of a kinematic pair according to an embodiment of the present application is shown in FIG. 4. The user interface for modifying a parameter of a kinematic pair may include a window. The window may be divided into an upper part and a lower part based on functions. The upper part is used for setting a modeling state of the kinematic pair. The lower part is used for setting a parameter value of the kinematic pair.

Specifically, as shown in FIG. 4, a "Set Modeling" button is used for setting modeling states of a group of selected kinematic pairs having same parameter values to an editable state. In this state, parameter values of the kinematic pairs can be modified. An "End Modeling" button is used for setting modeling states of a group of selected kinematic pairs having same parameter values to a non-editable state. In this state, parameters of the kinematic pairs cannot be set. An "OK" button means confirming a current setting for execution. A "CLOSE" button means canceling a current setting.

It should be understood that plug-in names and button names on the user interface shown in FIG. 4 are only examples. For example, the user interface may be named a kinematic pair parameter editor, which is not limited in the embodiments of the present application.

Four input boxes on the user interface shown in FIG. 4 are respectively used for resetting the values of the first parameter of the selected kinematic pairs.

In a possible implementation, after a group of kinematic pairs having same parameter values are selected, a plug-in (for example, the Joint Editor plug-in) for modifying a parameter of a kinematic pair according to an embodiment of the present application may be started. Then, the " Set Modeling" button is clicked to set modeling states of the selected group of kinematic pairs having the same parameter values to an editable state. According to actual requirements or a pre-designed parameter value of a kinematic pair, a required value is entered in a corresponding input box, and then the "OK" button is clicked to complete batch modification of the parameter values of the kinematic pairs.

Optionally, in addition to the function of modifying a modeling state of a kinematic pair and a parameter value of a kinematic pair, the user interface for modifying a parameter of a kinematic pair may further have a function of selecting a kinematic pair added. For example, a group of kinematic pairs having same parameter values may be selected on the interface shown in FIG. 4.

It should be understood that the user interface for modifying a parameter of a kinematic pair shown in FIG. 4 is only an example rather than a limitation. A window layout shown in FIG. 4 and specific designs of functional operation areas may be adjusted according to actual requirements, which will not be specifically limited in the embodiments of the present application.

In this embodiment of the present application, the Joint Editor plug-in is obtained through development and debugging based on Visual Studio. The Joint Editor plug-in can process and modify parameter values of kinematic pairs in a 3D digital model in batch, and can modify modeling states of kinematic pairs in batch.

In this embodiment of the present application, a plurality of functions may be integrated into the same one user interface. Specifically, the plurality of functions may include: selecting a plurality of kinematic pairs in batch, modifying modeling states of models of kinematic pairs in batch, setting parameter values of kinematic pairs in batch, etc.

In S303, modeling states of the selected group of kinematic pairs are modified to an editable state, that is, a model modification permission is enabled, where in this state, parameter values of the group of kinematic pairs can be modified.

Specifically, in an implementation, in the Process Simulate software of Tecnomatix, after the group of kinematic pairs having the same parameter values are selected, a "Set Modeling" command in the Joint Editor plug-in may be executed to set the modeling states of the group of kinematic pairs to the editable state.

It should be understood that step S303 may be performed before step S302 or after step S302, which are examples and will not be limited in the embodiments of the present application.

Optionally, in S304, it is determined whether the selected group of kinematic pairs is the group of kinematic pairs having same parameter values. If no kinematic pair is selected or a selected object is not a kinematic pair, a selection error message is displayed. Then, kinematic pairs need to be re-selected, and the Joint Editor plug-in needs to be restarted. If the selected group of kinematic pairs are determined as being correct, step S305 is performed.

It should be understood that in this embodiment of the present application, step S304 may be performed before S302 or after step S303, which are examples and will not be limited in the embodiments of the present application.

In S305, parameters of the selected group of kinematic pairs having the same parameters are modified in batch.

For example, when the selected group of kinematic pairs have a same upper limit of motion, lower limit of motion, maximum acceleration, and maximum speed, the Joint Editor plug-in may reset the upper limit of motion, the lower limit of motion, the maximum acceleration, and the maximum speed of the group of kinematic pairs.

In S306, it is determined whether an entered value of the first parameter is correct. If an entered upper limit of motion is less than the lower limit of motion, the Joint Editor plug-in displays an input error message, and displays the sentence in a popped dialog box that reads: "The entered upper limit of motion is less than the lower limit of motion. Please modify." If entered content is not of a data type, an input error message is displayed, and the sentence is displayed in a popped dialog box that reads: "The entered content is not a value. Please re-enter." It should be understood that the foregoing pieces of content displayed in the shown dialog boxes are only examples, and will not be limited in the embodiments of the present application.

In S307, the first parameter of the group of kinematic pairs is modified. After entered parameter values of the kinematic pairs are determined as being correct, the OK button is clicked, and the Joint Editor plug-in traverses the selected group of kinematic pairs and performs automatic modification until parameter values of all kinematic pairs are modified.

Optionally, in S308, modeling states of the selected group of kinematic pairs are modified to a non-editable state, that is, the model modification permission is disabled, where in this state, parameter values of the group of kinematic pairs cannot be modified.

Specifically, in an implementation, in the Process Simulate software of Tecnomatix, after the group of kinematic pairs having the same parameter values are selected, an "End Modeling" command in the Joint Editor plug-in may be executed to set the modeling states of the group of kinematic pairs to the non-editable state.

Optionally, the plug-in may further automatically generate log information, where the log information may be used to record input information and output information during modification of parameters of kinematic pairs made by a user. When an error occurs during virtual debugging, troubleshooting may be performed based on the log information, which can improve the accuracy of modifying parameters of kinematic pairs during virtual simulation.

FIG. 5 is a schematic block diagram of an apparatus 500 for modifying a parameter of a kinematic pair according to an embodiment of the present application. The apparatus 500 can perform the method for modifying a parameter of a kinematic pair in the foregoing embodiments of the present application. The kinematic pair is included in a first device, and the first device is configured with control software.

As shown in FIG. 5, the apparatus 500 includes:
an obtaining module 510 configured to obtain a target value of a first parameter, where the first parameter is a motion state parameter of a kinematic pair,
the obtaining module 510 being further configured to obtain N first kinematic pairs, where the N first kinematic pairs have same values of the first parameter, and N is an integer greater than or equal to 1; and
a processing module 520 configured to set modeling states of the N first kinematic pairs in the control software to an editable state,
the processing module 520 being further configured to call the control software to modify the values of the first parameter of the N first kinematic pairs to the target value.

Specifically, the first parameter of the first kinematic pairs includes at least one of the following: a lower limit of motion, an upper limit of motion, a maximum speed, and a maximum acceleration.

Optionally, in some embodiments, if the obtaining module 510 does not obtain the N first kinematic pairs, or if the N first kinematic pairs obtained by the obtaining module 510 do not have same values of the first parameter, the processing module 520 is further configured to call the control software to output first information, where the first information is used to indicate the re-obtaining of the N first kinematic pairs.

Optionally, in some embodiments, if an upper limit of motion is less than a lower limit of motion in a first parameter modified by the processing module 520 by calling the control software, or if a type of a value of the first parameter modified by the processing module 520 by calling the control software is not a numeric type, the processing module 520 is further configured to call the control software to output second information, where the second information is used to indicate the re-obtaining of a target value of the first parameter.

Optionally, in some embodiments, the processing module 520 is further configured to set modeling states of the N first kinematic pairs in the control software to a non-editable state.

Optionally, in some embodiments, the obtaining module 510 is specifically configured to, after project data is accessed in the control software, obtain the N first kinematic pairs from a project list of the project data, or the obtaining module 510 is specifically configured to obtain the N first kinematic pairs from the project list in the control software based on a preset identifier.

Optionally, in some embodiments, the processing module 520 is further configured to call the control software to generate log information, where the log information includes input information and output information, and the output information includes the first information and the second information.

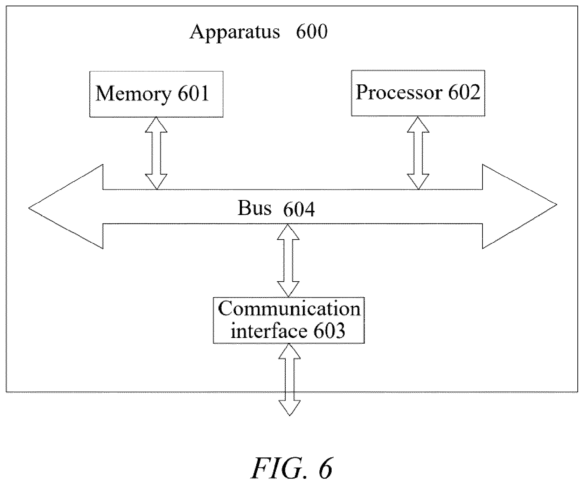

FIG. 6 is a schematic diagram of a hardware structure of an apparatus for modifying a parameter value of a kinematic pair according to an embodiment provide of the present application. As shown in FIG. 6, the apparatus 600 includes a memory 601, a processor 602, a communication interface 603, and a bus 604. The memory 601, the processor 602, and the communication interface 603 are communicatively connected to each other through the bus 604.

The memory 601 may be a read-only memory (ROM), a static storage device, and a random access memory (RAM). The memory 601 may store a program, and when the program stored in the memory 601 is executed by the processor 602, the processor 602 and the communication interface 603 are configured to perform the steps of the method for modifying a parameter value of a kinematic pair in the embodiments of the present application.

The processor 602 may be a general-purpose central processing unit (CPU), a microprocessor, an application-specific integrated circuit (ASIC), a graphics processing unit (GPU), or one or more integrated circuits, to execute related programs to implement functions required to be performed by different units in the apparatus for modifying a parameter value of a kinematic pair in the embodiments of the present application, or perform the method for modifying a parameter value of a kinematic pair in the embodiments of the present application.

The processor 602 may also be an integrated circuit chip having a signal processing capability. During implementation, the steps of the method for modifying a parameter value of a kinematic pair in the embodiments of the present application may be implemented by using a hardware integrated logic circuit in the processor 602, or by using instructions in the form of software.

The processor 602 may also be a general-purpose processor, a digital signal processor (DSP), an ASIC, a field-programmable gate array (FPGA) or another programmable logic device, a discrete gate or transistor logic device, or a discrete hardware component. Various methods, steps, and logical block diagrams disclosed in the embodiments of the present application may be implemented or executed. The general-purpose processor may be a microprocessor, or the processor may be any conventional processor, etc. The steps of the methods disclosed with reference to the embodiments of the present application may be directly presented as being performed and completed by a hardware processor, or performed and completed by a combination of hardware and a software module in a processor. The software module may be located in a mature storage medium in the art, such as a random access memory, a flash memory, a read-only memory, a programmable read-only memory, an electrically erasable programmable memory, or a register. The storage medium is located in the memory 601. The processor 602 reads information in the memory 601, and completes, in combination with its hardware, functions required to be performed by different units included in the apparatus for modifying a parameter value of a kinematic pair in the embodiments of the present application, or performs the method for modifying a parameter value of a kinematic pair in the embodiments of the present application.

The communication interface 603 uses a transceiver apparatus such as, but not limited to, a transceiver to implement communication between the apparatus 600 and other devices or communication networks. For example, traffic data of an unknown device may be obtained through the communication interface 603.

The bus 604 may include a path for transferring information between various components (for example, the memory 601, the processor 602, and the communication interface 603) of the apparatus 600.

It should be noted that although the above apparatus 600 is shown as including only the memory, the processor, and the communication interface, during specific implementation, those skilled in the art should understand that the apparatus 600 may further include other components necessary for normal operation. In addition, according to specific requirements, those skilled in the art should understand that the apparatus 600 may further include hardware components for implementing other additional functions. In addition, those skilled in the art should understand that the apparatus 600 may alternatively include only components necessary to implement the embodiments of the present application, and does not necessarily include all the components shown in FIG. 6.

An embodiment of the present application further provides a computer-readable storage medium storing program code executable by a device, where the program code includes instructions for performing the steps in the method for modifying a parameter value of a kinematic pair.

An embodiment of the present application further provides a computer program product. The computer program product includes a computer program stored on a computer-readable storage medium. The computer program includes program instructions that, when executed by a computer, cause the computer to perform the method for modifying a parameter value of a kinematic pair.

The foregoing computer-readable storage medium may be a transitory computer-readable storage medium or a non-transitory computer-readable storage medium.

Those skilled in the art can clearly understand that, for convenience and brevity of description, for a specific working process of the apparatus described above, reference may be made to the corresponding process in the foregoing method embodiments, which will not be described herein again.

In the several embodiments provided in the present application, it should be understood that the disclosed apparatus and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The wording used in the present application is only used to describe the embodiments, and is not used to limit the claims. As used in the description of the embodiments and the claims, the singular forms "a/an" and "the" are intended to also include the plural forms, unless otherwise clearly stated in the context. Similarly, as used in the present application, the term "and/or" refers to any of or all of possible combinations of one or more associated listed items. Additionally, when used in the present application, the term "including" indicates the presence of described features, entireties, steps, operations, elements, and/or components, but does not exclude the presence or addition of one or more other features, entireties, steps, operations, elements, components, and/or a combination thereof.

The aspects, embodiments, implementations, or features in the described embodiments can be used alone or in any combination. The aspects in the described embodiments can be implemented by software, hardware, or a combination thereof. The described embodiments may also be embodied by a computer-readable medium storing computer-readable code, and the computer-readable code includes instructions executable by at least one computing apparatus. The computer-readable medium may be associated with any data storage apparatus that can store data, and the data can be accessed by a computer system. For example, the computer-readable medium may include a read-only memory, a random access memory, a compact disc read-only memory (CD-ROM), a hard disk drive (HDD), a digital video disc (DVD), a magnetic tape, an optical data storage apparatus, etc. The computer-readable medium may also be distributed in a computer system connected through a network, so that the computer-readable code can be stored and executed in a distributed manner.

With regard to the above technical description, reference may be made to the accompanying drawings, which form a part of the present application and show, through the description, the implementations according to the described embodiments. Although these embodiments are described in sufficient detail to enable those skilled in the art to implement these embodiments, these embodiments are not limiting. Thus, other embodiments may be used, and changes may also be made without departing from the scope of the described embodiments. For example, the sequence of operations described in the flowchart is not limiting, and therefore, the sequence of two or more operations set forth in the flowchart and described according to the flowchart can be changed according to several embodiments. As another example, in several embodiments, one or more operations set forth in the flowchart and described according to the flowchart are optional or deletable. Additionally, some steps or functions may be added to the disclosed embodiments, or the sequence of two or more steps may be reversed. All these changes are considered to be included in the disclosed embodiments and claims.

Additionally, terms are used in the above technical description to provide a thorough understanding of the described embodiments. However, excessive details are not required to implement the described embodiments. Therefore, the above description of the embodiments is presented for explanation and description. The embodiments presented in the above description and the examples disclosed according to these embodiments are provided separately to add context and help understand the described embodiments. The specification above is not intended to be exhaustive or to limit the described embodiments to the precise form of the present application. According to the above teaching, modifications, selective applications, and changes are possible. In some cases, well-known processing steps are not described in detail to avoid unnecessarily affecting the described embodiments.

While the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A method for modifying a parameter of a kinematic pair, wherein the kinematic pair is comprised in a first device, and the first device is configured with control software, the method comprising:
obtaining a target value of a first parameter, wherein the first parameter is a motion state parameter of the kinematic pair;
obtaining N first kinematic pairs, wherein the N first kinematic pairs have same values of the first parameter, and N is an integer greater than or equal to 1;
setting modeling states of the N first kinematic pairs in the control software to an editable state; and
calling the control software to modify the values of the first parameter of the N first kinematic pairs to the target value.

2. The method according to claim 1, wherein the first parameter comprises at least one of the following: a lower limit of motion, an upper limit of motion, a maximum acceleration, and a maximum speed.

3. The method according to claim 1 or 2, wherein the method further comprises:
if the N first kinematic pairs are not obtained, or
if the obtained N first kinematic pairs do not have same values of the first parameter,
calling the control software to output first information, wherein the first information is used to indicate the re-obtaining of the N first kinematic pairs.

4. The method according to any one of claims 1 to 3, wherein the method further comprises:
if an upper limit of motion is less than a lower limit of motion in a modified first parameter, or
if a type of a value of the modified first parameter is not a numeric type,
calling the control software to output second information, wherein the second information is used to indicate the re-obtaining of a target value of the first parameter.

5. The method according to any one of claims 1 to 4, wherein the method further comprises:
setting modeling states of the N first kinematic pairs in the control software to a non-editable state.

6. The method according to claims 1 to 5, wherein the obtaining N first kinematic pairs comprises:
after project data is accessed in the control software, obtaining the N first kinematic pairs from a project list of the project data, or
obtaining the N first kinematic pairs from the project list in the control software based on a preset identifier.

7. The method according to any one of claims 1 to 6, wherein the first kinematic pair comprises: a cylinder shaft or a servo shaft.

8. The method according to any one of claims 1 to 7, wherein the method further comprises:
calling the control software to generate log information, wherein the log information comprises input information and output information, and the output information comprises the first information and the second information.

9. An apparatus for modifying a parameter of a kinematic pair, wherein the kinematic pair is comprised in a first device, and the first device is configured with control software, the system comprising:
an obtaining module configured to obtain a target value of a first parameter, wherein the first parameter is a motion state parameter of the kinematic pair,
the obtaining module being further configured to obtain N first kinematic pairs, wherein the N first kinematic pairs have same values of the first parameter, and N is an integer greater than or equal to 1; and
a processing module configured to set modeling states of the N first kinematic pairs in the control software to an editable state,
the processing module being further configured to call the control software to modify the values of the first parameter of the N first kinematic pairs to the target value.

10. An apparatus for modifying a parameter of a kinematic pair, comprising: a processor and a memory, wherein the memory is configured to store a program, and the processor is configured to call and run the program from the memory to perform the method according to any one of claims 1 to 8.

11. A computer-readable storage medium, comprising a computer program that, when run on a computer, causes the computer to perform the method according to any one of claims 1 to 8.
